# DEMANDE DE BREVET EUROPEEN

(11) **EP 0 910 204 A1**
(43) Date de publication de la demande: **21.04.1999**
(21) Numéro de dépôt: 98402529.6
(22) Date de dépôt: 13.10.1998
(51) Int. Cl.: H04N 1/00, H04N 1/04

(54) **Télécopieur portable**

(30) Priorité: 14.10.1997 FR 9712805
(71) Demandeur: SAGEM SA, 75116 Paris (FR)
(72) Inventeur: Cavarero, Eric, 78700 Conflans Sainte Honorine (FR); Chevrollier, Guy, 95740 Frepillon (FR)
(74) Mandataire: Bloch, Gérard

(57) **Abrégé**

Le télécopieur comporte des moyens d'alimentation autonome (15) et des moyens (11, 13) de raccordement à un poste de radiotéléphonie cellulaire (20) une tête (3; 33; 43) d'analyse optique d'une feuille (9) et une tête (2; 32; 42) d'impression d'une feuille de télécopie (9) coopèrent en alternance avec un rouleau commun (1) d'entraînement des feuilles (9), l'une des têtes (2, 3) pouvant être commandée par des moyens de gestion (21) déportés dans le poste (20).

## Description

Un télécopieur se raccorde, de façon classique, à une prise d'une ligne téléphonique, si bien qu'il est pratiquement immobilisé dans le local de travail qu'il dessert.

Il est apparu à la demanderesse que cette immobilisation relative devenait un inconvénient à mesure que la notion de local de travail pourvu d'appareils de bureau et occupé par un utilisateur s'estompait au profit de la notion d'utilisateur mobile entouré d'un bureau virtuel. En effet, le développement de la radiotéléphonie cellulaire, comme celle du réseau GSM, permet au porteur d'un poste de radiotéléphonie d'exécuter des tâches alors qu'il se déplace.

Un ordinateur personnel portable offre de même une mobilité, pour le traitement de textes, même s'il ne peut pas transmettre des données par radio.

Cependant, les appareils ci-dessus ne traitent pas la saisie et la restitution des images.

La présente invention vise à permettre, à un utilisateur mobile, la saisie et la restitution d'images.

A cet effet, l'invention concerne un télécopieur caractérisé par le fait qu'il comporte des moyens d'alimentation autonomes et des moyens de raccordement à un poste de radiotéléphonie cellulaire.

L'utilisateur peut ainsi, lorsqu'il se déplace, communiquer en temps réel avec d'autres appareils distants.

De préférence, une tête d'analyse optique d'une feuille et une tête d'impression d'une feuille de télécopie sont agencées pour coopérer en alternance avec un rouleau commun d'entraînement des feuilles.

La présence d'un seul rouleau permet de réduire le volume et le poids du télécopieur, ce qui en améliore la compacité, la portabilité et l'ergonomie.

Dans ce cas, il est avantageux qu'au moins l'une desdites têtes soit agencée pour être commandée par des moyens de gestion déportés dans le poste.

On diminue ainsi d'autant les ressources de traitement électroniques du télécopieur pour utiliser celles qui existent déjà dans le poste, par exemple un microprocesseur et des mémoires, que ce soit pour l'impression/saisie de documents ou pour la transmission des données correspondantes, c'est-à-dire l'établissement d'une liaison téléphonique et la gestion du protocole de transmission des données.

L'invention sera mieux comprise à l'aide de la description suivante d'une forme de réalisation préférée du télécopieur de l'invention, en référence au dessin annexé, sur lequel :
- la figure 1 représente schématiquement le télécopieur de l'invention, associé à un poste de radiotéléphonie, et
- les figures 2 et 3 illustrent respectivement deux variantes de réalisation du télécopieur.

Le télécopieur, référencé 10, est ici représenté très schématiquement en coupe latérale, c'est-à-dire que les axes des divers éléments rotatifs décrits ci-après sont perpendiculaires au plan de la figure.

Le télécopieur 10 comporte un rouleau 1 de contre-appui ou d'entraînement de feuilles de papier 9, à analyser optiquement par points ou à imprimer, associé à une tête d'impression 2 et à une tête 3 de lecture ou analyse, ici par contact (CIS), mutuellement décalées angulairement d'une valeur déterminée sur le pourtour du rouleau 1 et rappelées élastiquement vers une couche de pourtour 7 en matériau élastique de celui-ci, pour y plaquer une feuille 9 qui défile.

La tête d'impression 2 est ici une tête thermique destinée à recevoir du papier thermique. Cela présente l'avantage d'éviter la présence de deux rouleaux supports, débiteur et récepteur, de ruban encreur pour transfert thermique, ou sublimation, qui auraient cependant pu être prévus, tout comme une impression par projection d'encre.

Une goulotte 4, ou canal d'introduction des feuilles de papier 9, débouche ici au niveau de la tête d'impression 2 et se poursuit en aval de celle-ci par une goulotte circulaire 5 suivant le pourtour du rouleau 1 et aboutissant à la tête de lecture 3. Un canal ou goulotte aval 6 guide en sortie les feuilles 9.

Un microprocesseur 11, associé à une mémoire de données 12, gère l'ensemble des éléments 1 à 3 du télécopieur et est ici relié à un circuit d'interface 13 gérant une liaison, filaire dans cet exemple, avec un poste 20 de radiotéléphonie cellulaire, ici le réseau GSM. Un clavier 14, relié au microprocesseur 11, permet de commander le télécopieur.

Le poste 20 comporte un microprocesseur 21 gérant l'ensemble de ses circuits et en particulier un circuit 23 d'interface avec le circuit 13. Au microprocesseur 21 sont aussi raccordés une mémoire de données 22 et un clavier 24.

Le télécopieur 10 et le poste 20 comportent chacun une alimentation, respectivement 15, 25, par piles ou accumulateur, les rendent autonomes.

Le fonctionnement du télécopieur 10 va maintenant être expliqué.

Pour lire, ou scanner, une feuille 9 d'un document, l'utilisateur actionne une touche correspondante du clavier 14 et introduit la feuille 9 dans le canal 4. Au débouché de celui-ci, un capteur non représenté détecte le bord antérieur de la feuille 9 et commande, à travers le microprocesseur 11, la rotation du rouleau 1. La feuille 9 est entraînée devant la tête d'impression 2, inactive, et atteint la tête de lecture 3 qui va analyser l'image portée par la feuille 9 et remplir la mémoire 12. La feuille 9 ressort par le canal 6, deux galets d'extraction pouvant être prévus.

Pour une impression, commandée par une autre touche du clavier 14, une feuille 9 de papier thermique suit le trajet ci-dessus, unique, mais c'est cette fois la tête d'impression 2 qui est active et lit la mémoire 12, la tête d'analyse 3 étant inactive.

On conçoit que l'on peut permuter les positions relatives amont/aval des têtes 2 et 3. En particulier, la tête d'analyse 3 peut, en lecture et en impression, servir de capteur pour détecter la position du bord antérieur et/ou postérieur de la feuille 9 et commander en conséquence l'actionnement et l'arrêt du rouleau 1 par le microprocesseur 10. Si la tête d'analyse 3 est, comme représenté, en aval de la tête d'impression 2, elle commande la rotation du rouleau 1 alors que la feuille 9 est déjà engagée devant la tête d'impression 2. Un galet ou rouleau supplémentaire, libre ou entraîné, peut en outre être prévu pour coopérer pour former un laminoir d'entraînement avec le rouleau 1, en aval de la tête d'analyse 3.

Il peut en particulier être prévu de commander, par la touche activée du clavier 14, le sens de rotation du rouleau 1, c'est-à-dire que les canaux 4 et 6 ont alors des rôles interchangeables.

En impression et en lecture, la mémoire 12 stocke les données considérées. Le circuit d'interface 13 permet des échanges en émission et en réception, avec des terminaux reliés au réseau de radiotéléphonie, ici le réseau GSM. Pour cela, le microprocesseur 21 gère la mémoire 22 comme un tampon entre le réseau et la mémoire 12.

En émission ou réception radio, le microprocesseur 21 assure l'adaptation des données en mémoire 22, issues de la tête d'analyse 3 ou destinées à la tête d'impression 2, afin de permettre leur transmission à travers le réseau GSM, c'est-à-dire que, en plus de la liaison physique: couche 1 de la classification internationale des systèmes ouverts (OSI), il gère les couches 2 et 3, d'adaptation du format de présentation des données, du débit de transmission et de gestion du protocole d'établissement de la communication. Les couches OSI supérieures 4 à 7 peuvent de même être traitées par le microprocesseur 21, pour l'application télécopie.

Comme en fait les microprocesseurs 11 et 21 sont fonctionnellement en série, il peut, d'une façon plus générale, être prévu que les tâches ci-dessus de gestion des transmissions de données soient effectuées par l'un ou bien par l'autre, par exemple en partage de temps dans le microprocesseur considéré, ou plus généralement une unité centrale, ou encore que ces tâches soient réparties entre eux.

Par ailleurs, et en dehors des tâches de transmission, il peut encore être prévu que le microprocesseur 21, avec la mémoire 22, assure tout ou partie des tâches de gestion, ainsi déportées hors du télécopieur 10, des divers organes du télécopieur 10, ce qui permet de supprimer, ou de simplifier, le microprocesseur 11 et la mémoire 12. L'alimentation 15 peut de même être déportée et même intégrée à l'alimentation 25. Un déport inverse des éléments ci-dessus, du poste 20 vers le télécopieur 10 est aussi envisageable. La liaison entre les circuits 13 et 23 peut en variante être non filaire, par exemple radio ou infrarouge, afin d'améliorer la mobilité du télécopieur 10.

Dans une variante de réalisation, il peut même être prévu d'intégrer ensemble le télécopieur 10 et le poste 20.

La façon selon laquelle les têtes d'impression 2 et de lecture 3 coopèrent avec le rouleau 1 va maintenant être expliquée plus en détails.

La tête d'impression 2, fixée sur le bâti du télécopieur portant les divers constituants, est plaquée sur le rouleau 1, avec une force d'environ 30 N.

Pour régler cette force, en production, la tête d'impression 2, à position réglable, est plaquée sur le rouleau 1 selon la force voulue puis verrouillée en position par un dispositif classique, non représenté, tel qu'une paire de vis engagées dans une paire de lumières de réglage respectives, les deux paires étant solidaires respectivement de paliers de l'axe du rouleau et de la tête d'impression 2. Le placage ci-dessus peut être effectué par un outillage amovible tel que ressort de rappel taré ou tout autre dispositif exerçant la force voulue et ne présentant pas obligatoirement une quelconque élasticité.

La distance entre la tête d'impression 2 et l'axe du rouleau 1 étant donc réglée et fixée, c'est la couche 7 de surface du rouleau 1 qui assure la coopération avec élasticité entre la tête 2 et le rouleau 1. On économise ainsi un ressort de rappel de la tête 2 vers le rouleau 1. L'épaisseur de la couche élastique 7 est choisie de façon telle qu'elle soit suffisante pour que la force de placage ci-dessus reste dans une plage prévue lorsque des feuilles 9 de diverses épaisseurs viennent modifier la force de pression prévue par le réglage.

Dans le cas où l'élasticité de la couche élastique du rouleau 1 serait suffisante pour rester dans la plage prévue, c'est-à-dire d'avoir un rappel contrôlé, le réglage de position ci-dessus ne serait alors plus nécessaire.

On conçoit que, inversement, il pourrait être prévu que ce soit la position de l'axe du rouleau 1 qui soit réglable, la force de placage prévue étant alors, au montage, exercée sur le rouleau 1 en direction de la tête 2. En variante, il peut être prévu que la couche de rappel de la surface du rouleau 1 vers la tête 2 soit interne au rouleau 1 et, par exemple, soit au contact de son axe, au niveau donc des paliers évoqués ci-dessus, et porte une couche plus rigide.

Le principe de réglage de position exposé ci-dessus est aussi valable pour la tête de lecture 3, fixée à une distance d'environ 0,1 mm du pourtour 7 du rouleau 1. Pour compenser le jeu de montage du rouleau 1 et de la tête 3, il peut être prévu que la position de l'un de ces deux éléments (ici la tête 3) puisse être réglée au montage et, après interposition d'une feuille formant cale de réglage, l'élément mobile est fixé dans la position voulue.

Dans le cas, en fonctionnement, où l'épaisseur d'une feuille 9 est insuffisante pour qu'elle soit plaquée sur la tête de lecture 3, la profondeur de champ de celle-ci permet de tolérer un tel jeu.

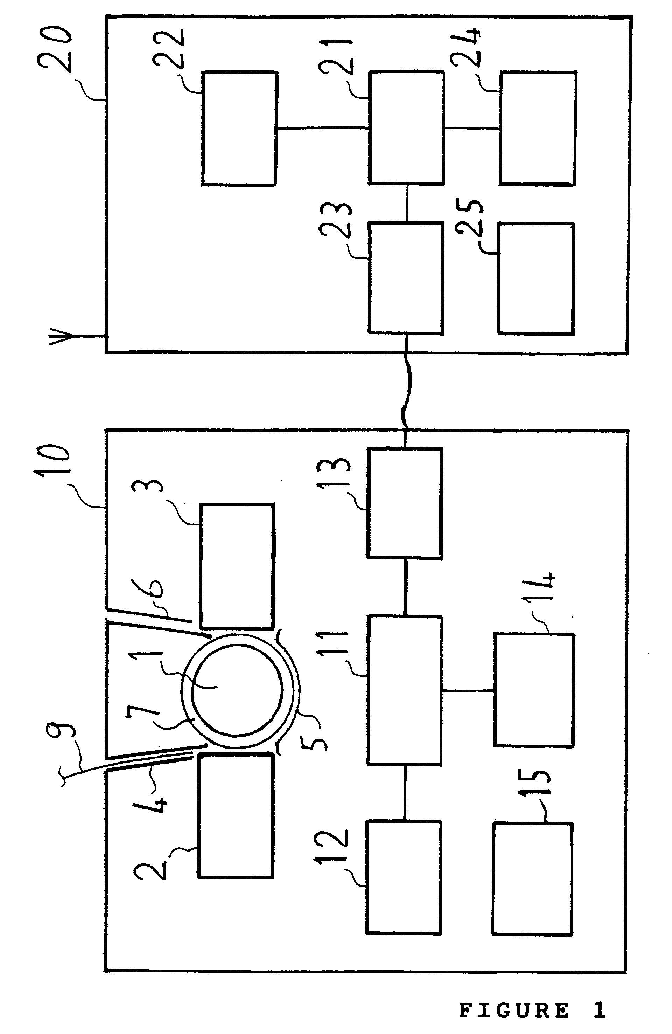

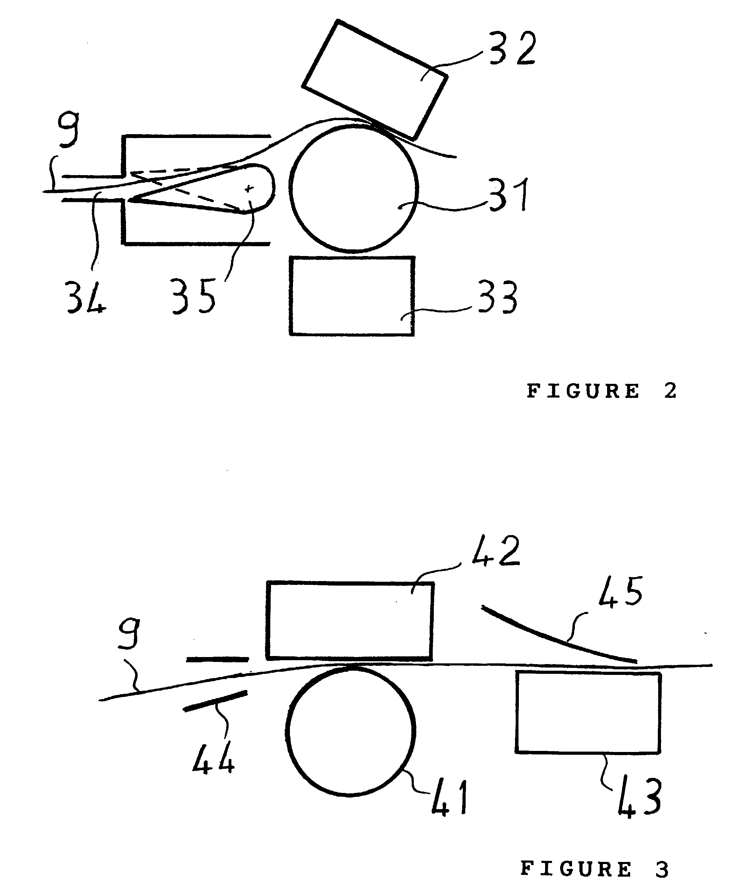

Dans la variante de la figure 2, où les éléments inchangés par rapport au télécopieur de la figure 1 n'ont pas été représentés, les feuilles 9 sont introduites par un canal 34 au débouché duquel se trouve un clapet d'aiguillage 35, monté rotatif, autour d'un axe parallèle à celui du rouleau d'entraînement 31 disposé en aval. Le clapet 35, à commande manuelle directe ou par un actionneur commandé par touche (14), pivote entre une position d'aiguillage des feuilles 9 d'un côté du rouleau 31, représentée en trait plein, pour leur impression par une tête 32, plaquée sur le rouleau 31 et une position d'aiguillage vers l'autre côté, représentée en ligne pointillée, pour leur lecture par une tête 33 plaquée aussi sur le rouleau 1. Le sens de rotation du rouleau 31 est commandé par la commande ci-dessus du clapet amont 35 .

La figure 3 illustre encore une autre variante, dans laquelle un rouleau d'entraînement et de contre appui 41 est opposé à une tête d'écriture 42, en aval d'un canal 44 d'introduction des feuilles 9. En aval de l'ensemble, sur le trajet unique des feuilles 9, se trouvent une tête de lecture 43 opposée à une goulotte 45 de guidage des feuilles 9. La tête de lecture 43 n'est ici pas en contact avec le rouleau 41 et, étant à l'écart de celui-ci, c'est la goulotte 45 qui sert de contre-appui pour la lecture, le rouleau 41 ne coopérant avec la tête 43 que pour faire défiler la feuille 9 devant elle.

Le télécopieur de l'invention peut bien évidemment être raccordé à des terminaux autres qu'un poste de radiotéléphonie, par exemple un poste téléphonique filaire ou un PC, adaptés comme indiqué pour le poste 20. Une liaison (13, 23) infrarouge permet en particulier au télécopieur 1 de dialoguer avec des terminaux fixes successifs, lors de ses déplacements dans des locaux.

## Revendications

1. Télécopieur comportant des moyens d'alimentation autonome (15), des moyens (11, 13) de raccordement à un poste de radiotéléphonie cellulaire (20), une tête (3; 33; 43) d'analyse optique d'une feuille (9) et une tête (2; 32; 42) d'impression d'une feuille de télécopie (9), caractérisé par le fait qu'au moins l'une desdites têtes (2, 3) est agencée pour être commandée par des moyens de gestion (21) déportés dans le poste (20).

2. Télécopieur selon la revendication 1, dans lequel les têtes (2, 32, 3, 33) sont agencées pour coopérer en alternance avec un rouleau commun (1; 31; 41) d'entraînement des feuilles (9).

3. Télécopieur selon l'une des revendications 1 et 2, dans lequel les têtes (2, 3; 32, 33) présentent un décalage angulaire mutuel déterminé sur le pourtour du rouleau (1; 31).

4. Télécopieur selon l'une des revendications 2 et 3, dans lequel il est prévu des moyens (14) pour déterminer le sens de rotation du rouleau (1; 31) en fonction de la tête (2, 3; 32, 33) qui coopère.

5. Télécopieur selon la revendication 4, dans lequel il est prévu un clapet (35) d'aiguillage des feuilles (9) vers l'une ou l'autre des têtes (32, 33).

6. Télécopieur selon l'une des revendications 1 à 4, dans lequel les têtes (2, 3; 42, 43) sont disposées sur un trajet unique des feuilles (9).

7. Télécopieur selon la revendication 6, dans lequel l'une des têtes (43) est à l'écart du rouleau (41).

8. Télécopieur selon l'une des revendications 1 à 7, dans lequel le rouleau (1) comporte une couche élastique (7) de rappel contrôle de sa surface vers au moins, parmi lesdites têtes (2, 3), la tête d'impression (2).

9. Télécopieur selon la revendication 8, dans lequel il est prévu des moyens de réglage de la distance entre l'axe du rouleau (1) et la tête (2, 3).
